# EUROPÄISCHE PATENTANMELDUNG

(11) **EP 2 774 814 A1**
(43) Veröffentlichungstag der Anmeldung: **10.09.2014**
(21) Anmeldenummer: 13158290.0
(22) Anmeldetag: 08.03.2013
(51) Int. Cl.: B60Q 1/26, G02B 6/00

(54) **Spiegelblinkleuchte für einen Außenrückspiegel**

(71) Anmelder: Flextronics Automotive GmbH & Co. KG, 72636 Frickenhausen (DE)
(72) Erfinder: Dimitrij, Bernhardt, 73760 Ostfildern (DE); Fazlagic, Azra, 72762 Reutlingen (DE); Dr. Wimbert, Frank, 73277 Owen (DE)
(74) Vertreter: Kohler Schmid Möbus

(57) **Zusammenfassung**

Bei einer Spiegelblinkleuchte (1; 1') mit einem Gehäuserückteil (2) aus lichtundurchlässigem Kunststoffmaterial, mit einem am Gehäuserückteil (2) befestigten Hauptlichtleiter (3) aus transparentem Kunststoffmaterial und mit einer Lichtquelle (5), deren Licht in die eine, erste Stirnseite (9) des Hauptlichtleiters (3) eingekoppelt und über die dem Gehäuserückteil (2) abgewandte Mantelseite (10) des Hauptlichtleiters (3) nach vorne ausgekoppelt wird, sind erfindungsgemäß das Gehäuserückteil (2) und entweder der Hauptlichtleiter (3) oder ein separater Zusatzlichtleiter (13'), in den Licht des Hauptlichtleiters (3) eingekoppelt wird, einteilig durch ein 2K-Spritzteil hergestellt.

## Beschreibung

Die vorliegende Erfindung betrifft eine Spiegelblinkleuchte mit einem Gehäuserückteil aus lichtundurchlässigem Kunststoffmaterial, mit einem am Gehäuserückteil befestigten Hauptlichtleiter aus transparentem Kunststoffmaterial und mit einer Lichtquelle, deren Licht in die eine, erste Stirnseite des Hauptlichtleiters eingekoppelt und über die dem Gehäuserückteil abgewandte Mantelseite des Hauptlichtleiters nach vorne ausgekoppelt wird.

Bei einer bekannten Spiegelblinkleuchte dieser Art ist ein transparenter Lichtleiter in das lichtundurchlässige Gehäuserückteil eingelegt und darin durch eine am Gehäuserückteil montierte transparente Lichtscheibe befestigt, was einen gewissen Montageaufwand erfordert.

Demgegenüber ist es die Aufgabe der vorliegenden Erfindung, bei einer Spiegelblinkleuchte der eingangs genannten Art die Anzahl an Einzelteilen weiter zu reduzieren.

Diese Aufgabe wird erfindungsgemäß dadurch gelöst, dass das Gehäuserückteil und entweder der Hauptlichtleiter oder ein separater Zusatzlichtleiter, in den Licht des Hauptlichtleiters eingekoppelt wird, einteilig durch ein 2K-Spritzteil hergestellt sind.

Erfindungsgemäß sind das Gehäuserückteil und der Hauptlichtleiter oder im Falles eines separaten Zusatzlichtleiters das Gehäuserückteil und der Zusatzlichtleiter als eine Einheit (2K Spritzteil) ausgeführt. Im letzteren Fall ist der Hauptlichtleiter ein Einzelteil, das am Gehäuserückteil montiert wird.

Bei einer bevorzugten Ausführungsform der Erfindung weist der einteilig mit dem Gehäuserückteil hergestellte Hauptlichtleiter Vorsprünge aus dem gleichen transparenten Kunststoffmaterial auf, mit denen der Hauptlichtleiter am Gehäuserückteil einteilig verbunden ist.

Bei einer besonders bevorzugten ersten Ausführungsform der Erfindung weist der einteilig mit dem Gehäuserückteil hergestellte Hauptlichtleiter an seinem der Lichtquelle abgewandten Ende einen nach hinten abgewinkelten Abzweigstrang auf, dessen Stirnseite gegenüber der ersten Stirnseite des Hauptlichtleiters um ca. 75° bis 90° nach hinten ausgerichtet ist und der besonders vorteilhaft durch das Leuchtengehäuse hindurch durchtritt. Der Hauptlichtleiter teilt sich also am äußeren Ende in zwei Stränge auf, wobei jeder Strang seine eigene Funktion erfüllt. Der Hauptstrang dient der Lichttransmission zum gesetzlich vorgeschriebenen Lichtaustrittsbereich. Der Abzweigstrang taucht durch die Gehäusewand durch und ermöglicht die Lichttransmission auf die Rückseite des Gehäuses zum Fahrer-Informationsfenster. Als Lichtquelle für alle lichttechnischen Funktionen reicht eine einzelne LED aus.

Bei einer besonders bevorzugten zweiten Ausführungsform der Erfindung bildet der einteilig mit dem Gehäuserückteil hergestellte Zusatzlichtleiter einen durch das Gehäuserückteil hindurch tretenden Abzweigstrang aus, dessen eine Stirnseite auf der Vorderseite des Gehäuserückteils und dessen andere Stirnseite auf der Rückseite des Gehäuserückteils angeordnet sind. Vorteilhaft bei dieser zweiten Ausführungsform ist eine einfachere 2K Spritzgusswerkzeugkonstruktion im Vergleich zu der ersten Ausführungsform. Vorzugsweise ist die auf der Rückseite des Gehäuserückteils angeordnete Stirnseite des Zusatzlichtleiters gegenüber der ersten Stirnseite des Hauptlichtleiters um ca. 75° bis 90° nach hinten ausgerichtet. Auch kann der Hauptlichtleiter eine der vorderseitigen Stirnseite des Zusatzlichtleiters zugewandte Auskoppelstelle aufweisen, über die Licht aus dem Hauptlichtleiter ausgekoppelt und über die vorderseitige Stirnseite in den Zusatzlichtleiter eingekoppelt wird.

Vorzugsweise ist dem Lichtleiter auf seiner dem Gehäuserückteil abgewandten Seite eine Lichtscheibe aus transparentem Kunststoffmaterial vorgeordnet, die vorteilhaft am Gehäuserückteil, insbesondere unter Ausbildung eines in sich geschlossenen Leuchtengehäuses, befestigt sein kann.

Bei bevorzugten Ausführungsformen der Erfindung ist der Lichtleiter bogenförmig, insbesondere ca. ¼-kreisbogenförmig, ausgebildet, und die andere, zweite Stirnseite des Lichtleiters ist gegenüber der ersten Stirnseite um ca. 40° bis 80° ausgerichtet.

Die Erfindung betrifft auch einen Außenrückspiegel mit einem Außenrückspiegelgehäuse, einem darin angeordneten Rückspiegel und einer wie oben ausgestalteten Spiegelblinkleuchte, die zwischen Außenrückspiegelgehäuse und Rückspiegel angeordnet ist. Vorzugsweise weist die zweite Stirnseite des Hauptlichtleiters entgegen der Fahrtrichtung, und die Stirnseite des nach hinten abgewinkelten Abzweigstrangs ist hinter einem durchsichtigen Fenster des Rückspiegels oder seitlich neben dem Rückspiegel angeordnet. Dieser Außenrückspiegel mit integrierter Spiegelblinkleuchte erfüllt die folgenden lichttechnischen Funktionen:
- kontinuierliche Lichtauskopplung in Fahrtrichtung über rückseitige Optikstrukturen am Hauptlichtleiter oder lichtstreuende Materialien,
- Lichtauskoppelung zur Seite in einen gesetzlich vorgeschriebenen Bereich, und
- Lichtauskoppelung auf Rückseite entgegen der Fahrtrichtung zum Fahrer-Informationsfenster des Rückspiegels.

Vorteilhafte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen Spiegelblinkleuchte in einer vorderseitigen Explosionsansicht;
- Fig. 2: einen Längsschnitt der Spiegelblinkleuchte von Fig. 1;
- Fig. 3: eine Detailansicht der Spiegelblinkleuchte gemäß III in Fig. 2;
- Fig. 4: eine zweite Ausführungsform der erfindungsgemäßen Spiegelblinkleuchte in einer vorderseitigen Explosionsansicht;
- Fig. 5: einen Längsschnitt der Spiegelblinkleuchte von Fig. 4;
- Fig. 6: eine Detailansicht der Spiegelblinkleuchte gemäß VI in Fig. 5; und
- Fign. 7A, 7B: einen Außenrückspiegel mit der erfindungsgemäßen Spiegelblinkleuchte in einer Rückansicht (Fig. 7A) und in einer Schnittansicht (Fig. 7B) entsprechend VIIb-VIIb in Fig. 7A am Beispiel der Spiegelblinkleuchte von Fig. 1.

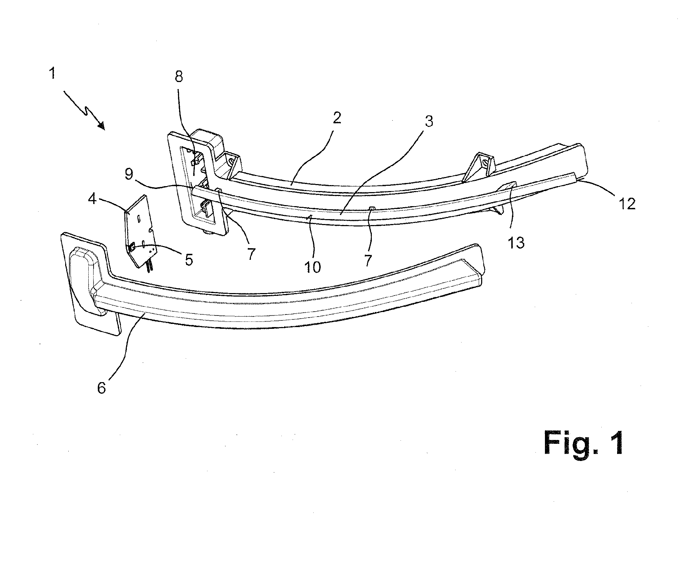

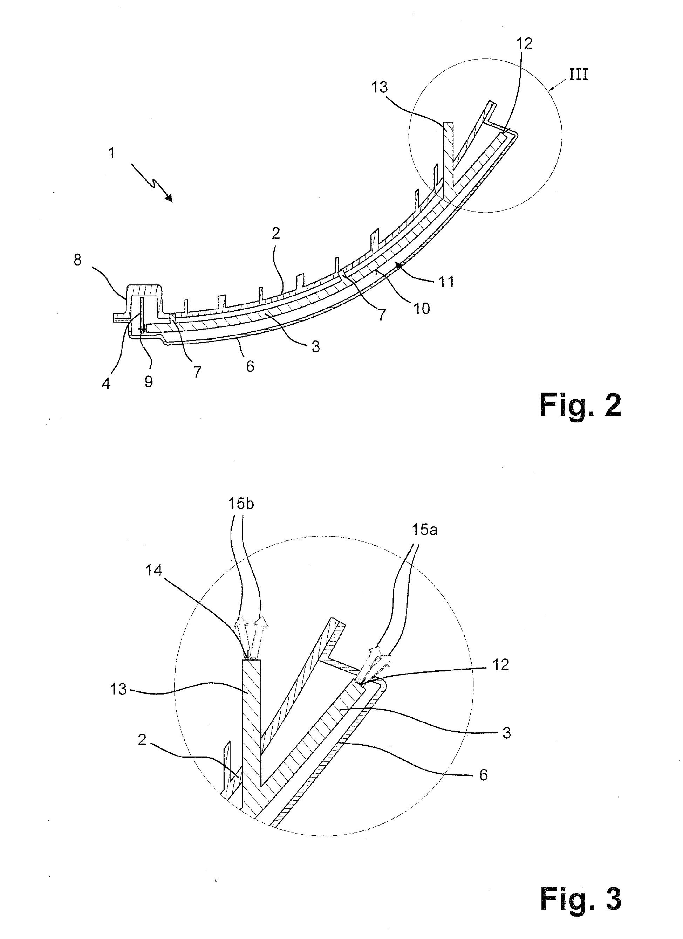

Die in **Fign. 1** **und** **2** gezeigte Spiegelblinkleuchte **1** umfasst ein bogenförmiges Gehäuserückteil **2** aus lichtundurchlässigem Kunststoffmaterial (z.B. schwarzem ABS-Kunststoff), einen vorderseitig am Gehäuserückteil 2 befestigten bogenförmigen Hauptlichtleiter **3** aus transparentem Kunsfistoffmaterial (z.B. PMMA glasklar), eine Leiterplatte **4** (z.B. aus FR4-Material) mit einer LED-Lichtquelle **5** und eine dem Hauptlichtleiter 3 auf seiner dem Gehäuserückteil 2 abgewandten Seite vorgeordnete bogenförmige Lichtscheibe 6 aus transparentem Kunststoffmaterial (z.B. PMMA glasklar).

Das Gehäuserückteil 2 und der Hauptlichtleiter 3 sind einteilig durch ein 2K-Spritzteil hergestellt. Der beabstandet zum Gehäuserückteil 2 angeordnete Hauptlichtleiter 3 weist mindestens zwei Vorsprünge 7 aus dem gleichen transparenten Kunststoffmaterial auf, mit denen er am Gehäuserückteil 2 einteilig verbunden ist.

Die Leiterplatte 4 ist in einer topfförmigen Aufnahme 8 des Gehäuserückteils 2 eingesetzt und dabei mit ihrer LED-Lichtquelle 5 vor der einen, hier linken Stirnseite 9 des Hauptlichtleiters 3 angeordnet. Das Licht der LED-Lichtquelle 5 wird in die linke Stirnseite 9 des Hauptlichtleiters 3 eingekoppelt und über die dem Gehäuserückteil 2 abgewandte, vorderseitige Mantelseite 10 des Hauptüchtieiters 3 nach vorne ausgekoppelt. Die rückseitige Mantelseite des Hauptlichtleiters 3 weist auf der gesamten Lichtleiterlänge eine hier nicht gezeigte Optikstruktur, z.B. eine Vielzahl von Quernuten, auf, an denen das in den Hauptlichtleiter 3 eingekoppelte Licht nach vorne abgelenkt und entlang der gesamten Lichtleiterlänge kontinuierlich über die vorderseitige Mantelseite 10 ausgekoppelt wird. Das so ausgekoppelte Licht tritt dann durch die Lichtscheibe 6, die am Gehäuserückteil 2 unter Ausbildung eines in sich geschlossenen Leuchtengehäuses **11** befestigt ist, vorne aus der Spiegelblinkleuchte 1 aus.

Die Spiegelblinkleuchte 1 ist also durch drei Einzelteile gebildet, nämlich durch das Gehäuserückteil 2 mit dem angespritzten Hauptlichtleiter 3, die Leiterplatte 4 mit der LED-Lichtquelle 5 und die Lichtscheibe 6.

Der Hauptlichtleiter 3 ist ca. ⅛-kreisbogenförmig ausgebildet, so dass die andere, rechte Stirnseite **12** des Hauptlichtleiters 3 gegenüber der ersten Stirnseite 9 um ca. 45° ausgerichtet ist. Wie in **Fig. 3** gezeigt, weist der Hauptlichtleiter 3 an seinem der LED-Lichtquelle 5 abgewandten Ende einen ca. 30° nach hinten abgewinkelten Abzweigstrang **13** auf, der mit dem Gehäuserückteil 2 einteilig verbunden ist und durch das Gehäuserückteil 2 hindurch durchtritt. Die Stirnseite **14** des Abzweigstrangs 13 ist gegenüber der ersten Stirnseite 9 um ca. 75° nach hinten ausgerichtet. Das über die rechte Stirnseite 12 austretende Licht ist mit Pfeilen **15a** und das über die Stirnseite 14 austretende Licht mit Pfeilen **15b** bezeichnet. Der durch das Gehäuserückteil 2 durchtauchende Abzweigstrang 13 übernimmt neben seiner lichttechnischen Funktion also auch eine den Hauptlichtleiter 3 tragende Funktion.

Neben der vorteilhaften Ausführung des Gehäuserückteils 2 und des Lichtleiters 3 als eine Einheit (2K Spritzteil) ist weiterhin von Vorteil, dass sich der Lichtleiter 3 am äußeren Ende in zwei Stränge aufteilt, wobei jeder Strang seine eigene Funktion erfüllt. Der Hauptstrang 3 dient der Lichttransmission zum gesetzlich vorgeschriebenen Lichtaustrittsbereich nach vorne und zur Seite. Der Abzweigstrang 13 taucht durch das Gehäuserückteil 2 durch und ermöglicht die Lichttransmission auf die Rückseite des Gehäuses zum Fahrer-Informationsfenster 25. Als Lichtquelle für alle Funktionen dient die LED-Lichtquelle, die auch durch eine einzelne LED gebildet sein kann.

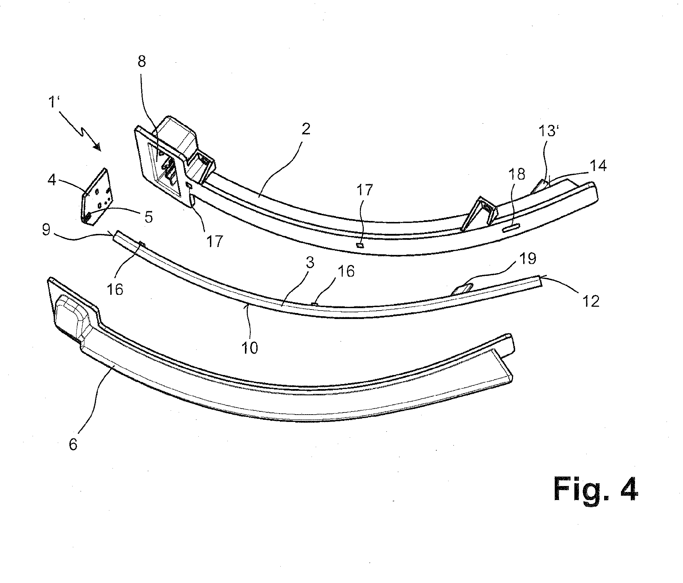

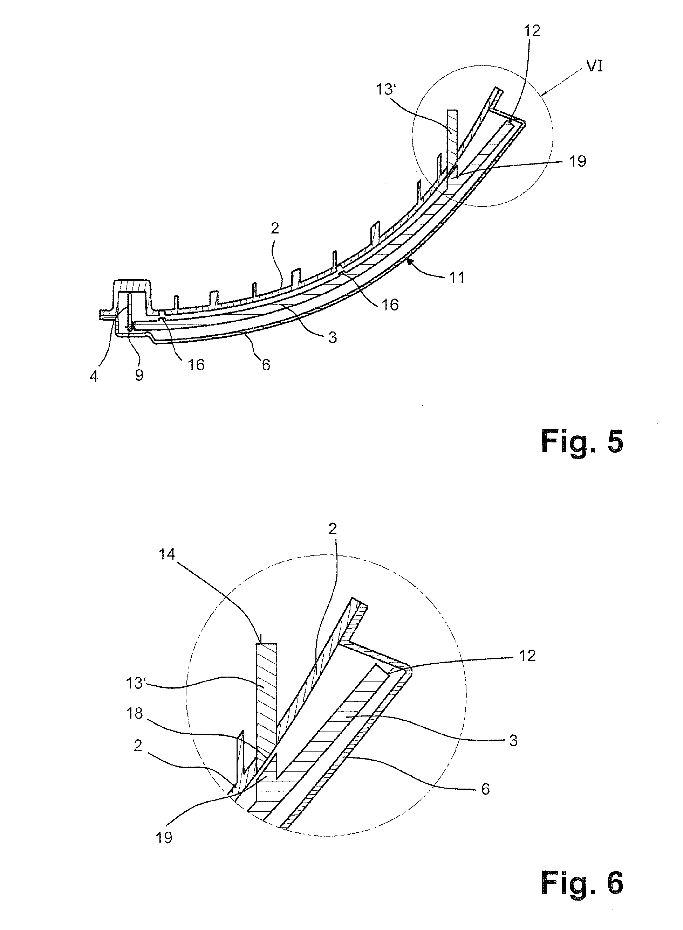

Von der Spiegelblinkleuchte 1 unterscheidet sich die in **Fign. 4** **und** **5** gezeigte Spiegelblinkleuchte **1'** dadurch, dass hier der Abzweigstrang nicht am Hauptlichtleiter 3 angeformt ist, sondern durch einen separaten Zusatzlichtleiter **13'** aus transparentem Kunststoffmaterial (z.B. PMMA glasklar) gebildet ist, der an dem Gehäuserückteil 2 angespritzt ist. Das Gehäuserückteil 2 aus lichtundurchlässigem Kunststoffmaterial und der Zusatzlichtleiter 13' aus transparentem Kunststoffmaterial sind also durch ein 2K-Spritzteil hergestellt. Der Hauptlichtleiter 3 ist ein separates Teil, das am Gehäuserückteil 2 montiert ist, z.B. indem der Hauptlichtleiter 3 mit Vorsprüngen **16** in entsprechende Aufnahmen **17** des Gehäuserückteils 2 geclipst ist.

Wie in **Fig. 6** gezeigt, tritt der Zusatzlichtleiter 13' durch das Gehäuserückteil 2 hindurch, d.h., die eine Stirnseite **18** des Zusatzlichtleiters 13' befindet sich auf der Vorderseite und die andere Stirnseite 14 auf der Rückseite des Gehäuserückteils 2. Auf Höhe der vorderseitigen Stirnseite 18 des Zusatzlichtleiters 13' weist der Hauptlichtleiter 3 an seiner rückseitigen Mantelseite eine hier lediglich beispielhaft als Auskoppelvorsprung ausgeführte Auskoppelstelle **19** auf, um so Licht aus dem Hauptlichtleiter 3 auszukoppeln und über die vorderseitige Stirnseite 18 in den Zusatzlichtleiter 13' ein- und über die rückseitige Stirnseite 14 wieder auszukoppeln. Der Zusatzlichtleiter 13' dient also zur Lichtübertragung durch die Wand des Gehäuserückteils 2 hindurch.

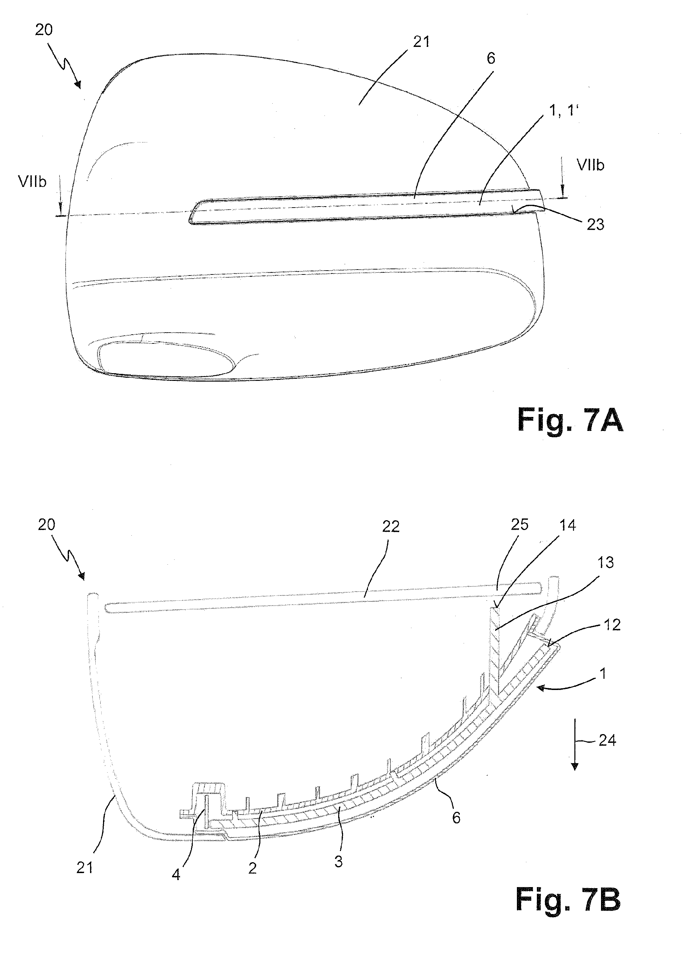

**Fig. 7A** zeigt einen Kfz-Außenrückspiegel **20** mit einem Außenrückspiegelgehäuse **21,** einem darin angeordneten Rückspiegel **22** (Fig. 7B) und der zwischen Außenrückspiegelgehäuse 21 und Rückspiegel 22 angeordneten Spiegelblinkleuchte 1, 1'. Die Lichtscheibe 6 der Spiegelblinkleuchte 1, 1' ist in einem horizontalen Schlitz **23** des Außenrückspiegelgehäuses 21 angeordnet.

**Fig. 7B** zeigt die Schnittansicht des Außenrückspiegels 20 am Beispiel der Spiegelblinkleuchte 1. Die rechte Stirnseite 12 des Hauptlichtleiters 3 weist entgegen der Fahrtrichtung **24,** und die Stirnseite 14 des nach hinten abgewinkelten Abzweigstrangs 13 des Lichtleiters 3 ist hinter einem durchsichtigen Fahrer-Informationsfenster **25** des Rückspiegels 22 angeordnet. Alternativ kann die Stirnseite 14 des nach hinten abgewinkelten Abzweigstrangs 13 auch seitlich neben dem Rückspiegel 22 enden. In beiden Fällen wird das Blinken der Spiegelblinkleuchte 1 dem Fahrer durch das aus der Stirnseite 14 des nach hinten abgewinkelten Abzweigstrangs 13 austretenden Lichts 16 angezeigt. Gleiches gilt analog auch für die Spiegelblinkleuchte 1'.

## Patentansprüche

1. Spiegelblinkleuchte (1; 1') mit einem Gehäuserückteil (2) aus lichtundurchlässigem Kunststoffmaterial, mit einem am Gehäuserückteil (2) befestigten Hauptlichtleiter (3) aus transparentem Kunststoffmaterial und mit einer Lichtquelle (5), deren Licht in die eine, erste Stirnseite (9) des Hauptlichtleiters (3) eingekoppelt und über die dem Gehäuserückteil (2) abgewandte Mantelseite (10) des Hauptlichtleiters (3) nach vorne ausgekoppelt wird,
**dadurch gekennzeichnet,**
**dass** das Gehäuserückteil (2) und entweder der Hauptlichtleiter (3) oder ein separater Zusatzlichtleiter (13'), in den Licht des Hauptlichtleiters (3) eingekoppelt wird, einteilig durch ein 2K-Spritzteil hergestellt sind.

2. Spiegelblinkleuchte nach Anspruch 1, **dadurch gekennzeichnet, dass** der einteilig mit dem Gehäuserückteil (2) hergestellte Hauptlichtleiter (3) Vorsprünge (7, 13) aufweist, mit denen der Hauptlichtleiter (3) am Gehäuserückteil (2) einteilig verbunden ist.

3. Spiegelblinkleuchte nach Anspruch 1 oder 2, **dadurch gekennzeichnet, dass** der einteilig mit dem Gehäuserückteil (2) hergestellte Hauptlichtleiter (3) an seinem der Lichtquelle (5) abgewandten Ende einen nach hinten abgewinkelten Abzweigstrang (13) aufweist, dessen Stirnseite (14) gegenüber der ersten Stirnseite (9) des Hauptlichtleiters (3) um ca. 75° bis 90° nach hinten ausgerichtet ist.

4. Spiegelblinkleuchte nach Anspruch 3, **dadurch gekennzeichnet, dass** der Abzweigstrang (13) des Hauptlichtleiters (3) durch das Gehäuserückteil (2) hindurch durchtritt.

5. Spiegelblinkleuchte nach Anspruch 1, **dadurch gekennzeichnet, dass** der einteilig mit dem Gehäuserückteil (2) hergestellte Zusatzlichtleiter (13') einen durch das Gehäuserückteil (2) hindurch tretenden Abzweigstrang ausbildet, dessen eine Stirnseite (18) auf der Vorderseite des Gehäuserückteils (2) und dessen andere Stirnseite (14) auf der Rückseite des Gehäuserückteils (2) angeordnet sind.

6. Spiegelblinkleuchte nach Anspruch 5, **dadurch gekennzeichnet, dass** die auf der Rückseite des Gehäuserückteils (2) angeordnete Stirnseite (14) des Zusatzlichtleiters (13') gegenüber der ersten Stirnseite (9) des Hauptlichtleiters (3) um ca. 75° bis 90° nach hinten ausgerichtet ist.

7. Spiegelblinkleuchte nach Anspruch 5 oder 6, **dadurch gekennzeichnet, dass** der Hauptlichtleiter (3) eine der vorderseitigen Stirnseite (18) des Zusatzlichtleiters (13') zugewandte Auskoppelstelle (19) aufweist, über die Licht aus dem Hauptlichtleiter (3) ausgekoppelt und über die vorderseitige Stirnseite (18) in den Zusatzlichtleiter (13') eingekoppelt wird.

8. Spiegelbünkleuchte nach einem der vorhergehenden Ansprüche, **dadurch gekennzeichnet, dass** dem Hauptlichtleiter (3) auf seiner dem Gehäuserückteil (2) abgewandten Seite eine Lichtscheibe (6) aus transparentem Kunststoffmaterial vorgeordnet ist.

9. Spiegelblinkleuchte nach Anspruch 8, **dadurch gekennzeichnet, dass** die Lichtscheibe (6) am Gehäuserückteil (2), insbesondere unter Ausbildung eines in sich geschlossenen Leuchtengehäuses (11), befestigt ist.

10. Spiegelblinkleuchte nach einem der vorhergehenden Ansprüche, **dadurch gekennzeichnet, dass** der Hauptlichtleiter (3) bogenförmig, insbesondere ca. ¼-bis ⅛-kreisbogenförmig, ausgebildet ist.

11. Spiegelblinkleuchte nach einem der vorhergehenden Ansprüche, **dadurch gekennzeichnet, dass** die andere, zweite Stirnseite (12) des Hauptlichtleiters (3) gegenüber der ersten Stirnseite (9) um ca. 40° bis 80° ausgerichtet ist.

12. Außenrückspiegel (20) eines Fahrzeugs, mit einem Außenrückspiegelgehäuse (21), einem darin angeordneten Rückspiegel (22) und einer zwischen Außenrückspiegelgehäuse (23) und Rückspiegel (22) angeordneten Spiegelblinkleuchte (1; 1') nach einem der vorhergehenden Ansprüche.

13. Außenrückspiegel nach Anspruch 12, **dadurch gekennzeichnet, dass** die Lichtscheibe (6) der Spiegelblinkleuchte (1; 1') in einem horizontalen Schlitz (23) des Außenrückspiegelgehäuses (21) angeordnet ist.

14. Außenrückspiegel nach Anspruch 12 oder 13, **dadurch gekennzeichnet, dass** die zweite Stirnseite (12) des Hauptlichtleiters (3) entgegen der Fahrtrichtung (24) weist.

15. Außenrückspiegel nach einem der Ansprüche 11 bis 13, **dadurch gekennzeichnet, dass** die Stirnseite (14) des nach hinten abgewinkelten Abzweigstrangs (13; 13') hinter einem durchsichtigen Fenster (25) des Rückspiegels (22) oder seitlich neben dem Rückspiegel (22) angeordnet ist.
